# EUROPEAN PATENT SPECIFICATION

(11) **EP 1 562 869 B1**
(45) Date of publication and mention of the grant of the patent: **14.12.2011**
(21) Application number: 03758374.7
(22) Date of filing: 09.10.2003
(51) Int. Cl.: C02F 3/06, C02F 1/64

(54) **PROCESS FOR TREATING WATER CONTAINING AMMONIA AND/OR NITRITE**
VERFAHREN ZUR BEHANDLUNG VON AMMONIA- ODER NITRIT- BELASTETEM WASSER
PROCEDE POUR TRAITER DE L'EAU CONTENANT DE L'AMMONIAC ET/OU DU NITRITE

(30) Priority: 10.10.2002 HU 0203416
(43) Date of publication of application: 17.08.2005
(73) Proprietor: Pinter, Csaba, 2800 Tatabanya (HU); Abraham, Gyula, 2831 Tarjan (HU)
(72) Inventor: PINTER, Csaba, H-2800 Tatabánya (HU); ABRAHAM, Gyula, H-2831 Tarján (HU); IFT, Miklos, H-7400 Kaposvár (HU); VIDA, Zotmund, H-7400 Kaposvár (HU)
(74) Representative: Asboth, Domokos
(86) International application number: PCT/HU2003/000080
(87) International publication number: WO 2004/033380

(56) References cited:
- DE-A- 2 111 794
- FR-A- 2 414 025
- FR-A- 2 450 236

## Description

### BACKGROUND OF THE INVENTION

### 1. Field of the Invention

The invention relates to a process for treating water containing ammonia and/or nitrite, wherein the water to be treated contains dissolved oxygen and the ammonia and/or nitrite content of the water to be treated are oxidized into nitrate by nitrifying bacteria, and whereby additionally iron and/or manganese content is removed from the water to be treated. The field of the invention covers the option of simultaneous removal of harmful gas.

### 2. Description of the Related Art

Underground and confined waters used as drinking water resources often contain ammonium and sometimes even nitrite in amounts endangering water supply. During the treatment of other components in and storage of water dissolved oxygen appears in water the presence of which, due to uncontrollable biological nitrification processes, results in the appearance of first nitrite and then nitrate in the water.

In order to enhance security of water supply it is highly recommended to remove ammonium ion and/or nitrite content of the water or at least to reduce it below permissible limits.

There are several methods known for removing ammonia and/or nitrite. Treatment by the so-called slow filters result in impeccable water quality, however the investment costs and space requirements are high. Before slow filtration suspended matters in the water as well iron and manganese contents should be removed from the water.

Ammonia can be removed with the help of microorganisms settled spontaneously in filter beds, however such filter beds, especially if the water contains iron and manganese precipitation, require frequent and intensive flushing, which deteriorates the effectiveness of nitrification, so repeated appearance of nitrites will follow.

Biological filtration with activated carbon is also known, where, subsequent to ozone treatment, removal of iron and manganese, mechanical filtration, microorganisms settled in the surface pores of the granulated activated carbon degrade ammonia as well as other absorbable organic contaminations.

Hungarian patent No. 185 024 describes a process for selective removal of the ammonia content of potable water with the aid of ion exchange processes which are quite complicated, require significant amount of chemicals and result in considerable environmental pollution.

EP Patent No. 0273174 describes a solution for the increase of the efficiency of biological ammonia oxidation and the concentration of biomass with the application of microorganisms fixed in gelatinous substances. The increased volume of biomass increases the effectiveness of degradation and the insensitivity of the process to load variations, however the charge should be exchanged when the cells fixed in the gel-matrix become aged.

In the process for treating natural waters with mainly gas, ammonia, iron and manganese content prior to disinfection and filtration according to Hungarian Patent No. 213 092 full oxidation of ammonia takes place in a biofilm formed on the surface of a fluidized granular carrier. The fluid bed according to the process, as any other solutions working on this principle, has fundamental technological disadvantages in addition to its several advantages. Keeping the bed in a fluid state within given expansion limits supposes an inner recirculation resulting in the necessity of keeping the values of the outgoing parameters below a given value by oversizing through *e. g*. connecting several stages in series, since recirculation makes the so-called pipe-reactor model much like the so-called tank reactor. The biomass volume that can be kept on the surface of the grains in the form of a biofilm is little, which makes it sensitive to load variations, changes of ammonia concentration and effects harmful to biofilm. It is not possible to recover a significant amount of biomass from the fluid bed, it is complicated to reinoculate it, and the stabilization of the biological process is time-consuming.

US Patent No. 4,253,947 describes a biological reactor operating properly in spite of variations in hydraulic loads, and offers a combined fluid-fixed bed reactor for the treatment of wastewater, where proportion of fluid bed to fixed bed is shifted towards greater proportion of fixed bed with the increase of the load. Due to the surplus of biomass accumulated in the fixed bed, water going through the reactor undergoes biological treatment of higher efficiency, than in the conventional fluid systems. The surplus is removed periodically from the fixed bed portion by mechanical impact. The process carries out nitrification of the ammonia content of the wastewater as well.

French Patent No. FR-A-2,414,025 describes a process and an apparatus for treating water to be used as commonly consumable water wherein the ammonia and/or nitrite content of the water to be treated are oxidized into nitrate by nitrifying bacteria. In the reactor of this solution, three phases: solid, liquid and gaseous ones are present at the same time.

### SUMMARY OF THE INVENTION

The main objective of the present invention is to provide a process where the shortcomings of the known solutions can be eliminated, which operates intensively, the iron and manganese precipitation resulting from oxidation by air do not deteriorate its operation, but in certain cases it even takes part in their removal, residual ammonium and nitrite level of intermediary product is practically zero, its operation is easy and reliable. The total surface of the retained precipitation is way above the specific surface of the charge, so the biological efficiency of the solution is the multiple of the conventional solutions.

The basic idea of the invention is in that water containing sufficient dissolved oxygen is to be made flow against gravitation through a granular bed, in the pores of which partly hydroxide flocks partly nitrifying biomass growth fixed to the flocks are accumulated.

Hence, according to the invention, a process for treating water containing ammonia and/or nitrite and additionally iron and/or manganese is as described in claim 1.

Various optional or preferred features are set out in the detailed description forming part of this specification.

Thus, in accordance with the process in this invention, with water to be treated containing iron and/or manganese content, said iron and/or manganese content is precipitated during the step of dissolving oxygen in the water to be treated and the precipitation is retained in the space provided between the grains of the granular material of the nitrification column.

In another preferred realisation, the treated water is first fed into a safety filter unit for removing any harmful gas content and producing excellent water quality in terms of both of water chemistry and microbiology and then it is led to the place of further utilization.

It is still another preferred realisation, wherein a residual water content gathered above a slurry settled in the settling tank is fed back for treating into the aeration unit.

It is further preferred, according to the invention, that during the step of dissolving oxygen, the oxygen is dissolved under at least atmospheric pressure and in at least partial flow, and an air flow containing the oxygen to be dissolved is preferably pre-treated on a sterilizing filter or by ozone, and the residual oxygen content of the treated water is between 1 to 3 mg/l, preferably 2 mg/l.

It is still preferable, when the speed of nitrification of the water under treatment within the nitrification column is less than 85 percent of a velocity of initial fluidization of the granular material charge of the nitrification column.

During the periodical fluidization of the granular material charge of the nitrification column, an impulse-like water flow or air feed are introduced into the nitrification column.

With waters to be treated without any absorbable organic matter content, it is preferable, according to the invention, that the nitrification is carried out in a usual granular material charge composed preferably of ordinary silica sand, and with waters to be treated having absorbable organic matters therein, the nitrification is carried out in a granular material charge composed preferably of granulated activated carbon or a mixture of silica sand and granulated activated carbon. In the case of water containing no adsorbable organic matters it can also be preferred that the speed of streaming of the water under treatment is regulated to 5 to 20 m/h, preferably 8 to 14 m/h, an impulse-like water flow is regulated to 40 to 150 m/h, preferably to 50 to 80 m/h, and an impulse-like air flow of the periodical fluidization (air shake-up) is regulated to 30 to 60 m/h.

With waters to be treated having absorbable organic matters therein, the realisation of the process of this invention can be preferred, wherein the speed of streaming of the water under treatment is regulated to 3 to 14 m/h, preferably 6 to 10 m/h, an impulse-like water flow regulated to 25 to 60 m/h, preferably to 30 to 50 m/h, and an impulse-like air flow (air shake-up) is regulated to 20 to 40 m/h.

With waters to be treated without any absorbable organic matter content, it can be preferred that an impulse-like shake-ups is repeated in every 3 to 24 hours, preferably every 6 to 12 hours, for a period of 15 to 60 seconds each.

With waters to be treated having absorbable organic matters therein, it is preferable if an Impulse-like shake-ups is repeated in every 3 to 24 hours, preferably every 6 to 12 hours, for a period of 4 to 20 seconds each.

In another preferred realisation, the safety filter unit has a silica sand charge or a hydroanthracite and silica sand charge, and a speed of flow of treated water is 12 to 36 m/h.

It is still another preferred realisation, wherein after an impulse-like periodical fluidization of the granular material charge of the nitrification column, (shake-up) a water amount with increased biomass and hydroxide precipitation and increased suspended matters content is discharged from the process or, preferably, it is sedimented and thereafter, the water is led back to the aeration unit and/or the biologically active slurry is used for inoculation or re-inoculation.

As a result of the process of this invention, the ammonia content of the water is oxidized to nitrate, iron and manganese contents are precipitated and retained, while the material balance of the bed can be ensured by short intensive fluidization in given intervals. The balance can be kept even if the amount of biomass retained is multiple of that absolutely necessary for nitrification. The quantity of biomass that can be accumulated in the pore volume of the granular filtration bed is way above the quantity of the biofilm forming on the carrier grains.

### BRIEF DESCRIPTION OF THE DRAWINGS

Preferred realisations of this invention will now be described by way of example with reference to the accompanying drawings, in which
- ***Fig. 1***: illustrates the technological process of a preferred realisation,

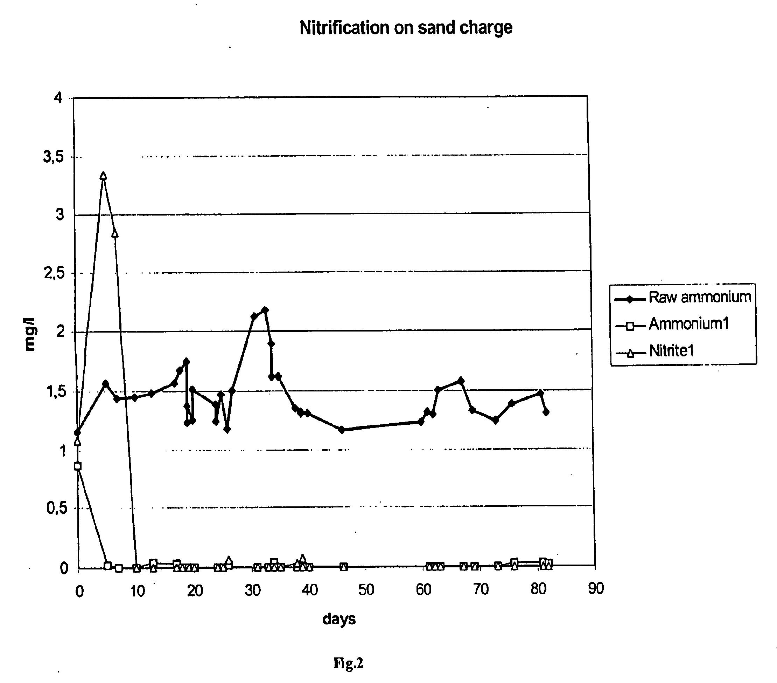

- ***Fig. 2***: shows the measurement results on silica sand charge during a pilot plant trial series of the process according to the invention lasting a long period, nearly 80 days,

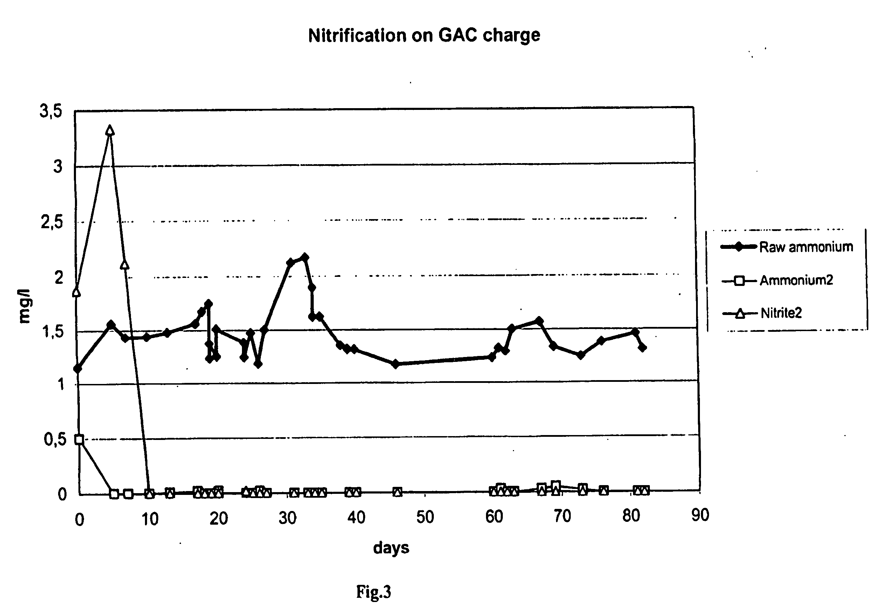

- ***Fig. 3***: shows the measurement results with a nitrification charge being granulated activated carbon (GAC),

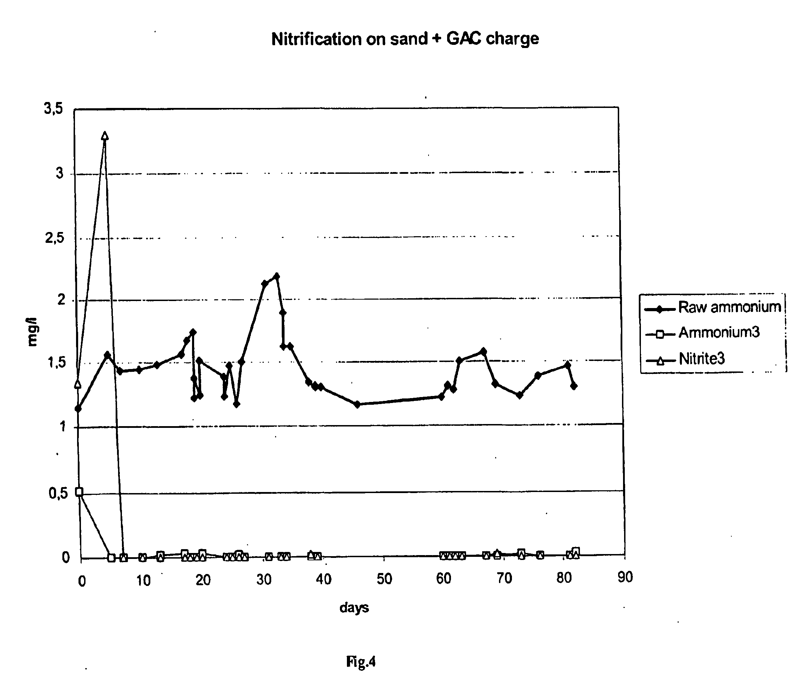

- ***Fig. 4***: shows the measurement results with a nitrification filter charge of silica sand and granulated activated carbon (GAC),

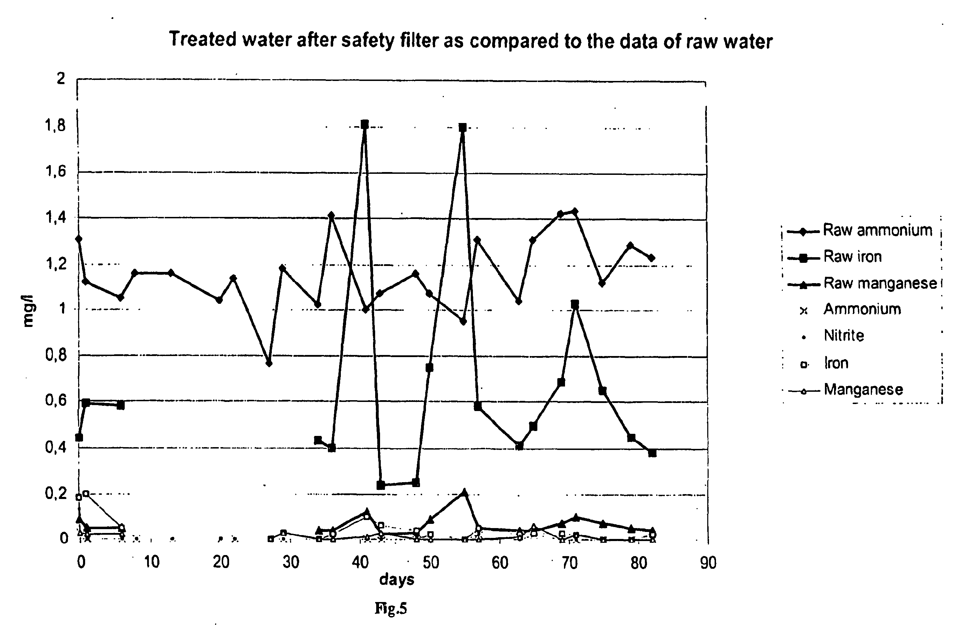

- ***Fig. 5***: shows the measurement results of raw ammonium, raw iron and raw manganese content of the raw water feed, as well as results of ammonium, nitrite, iron and manganese in treated water taken after the safety filter unit.

### DETAILED DESCRIPTION OF THE PREFERRED REALISATIONS

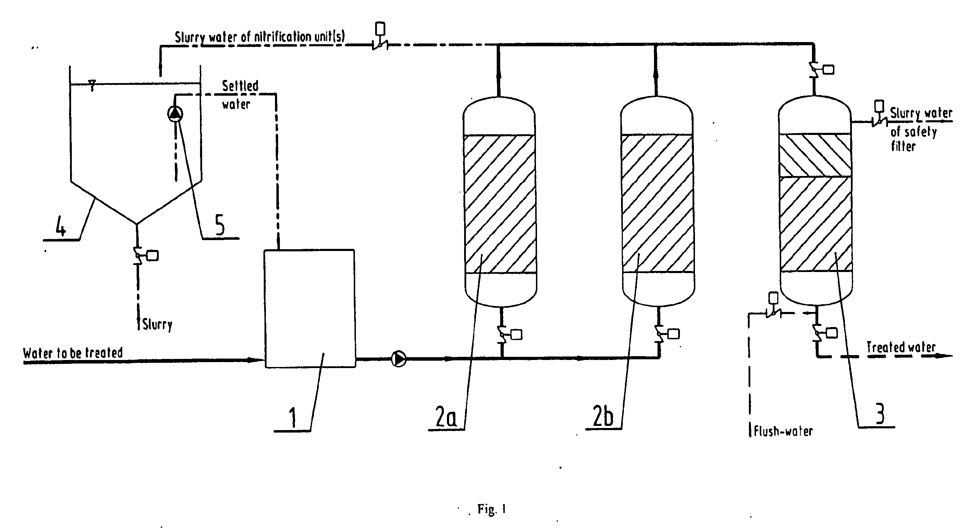

In the exemplified realization of the process according to this invention as shown in Fig. 1, water is fed into an aeration unit 1 where oxygen is dissolved in the water in accordance with its ammonia content. Then the water containing sufficient quantity of dissolved oxygen is fed to nitrification columns 2a and 2b being connected in parallel to each other, wherein the water flows from the bottom into upwards direction. The velocity of the medium does not exceed 85% of the initial fluidization velocity of the granular charge of the column 2a and 2b in most part of the working time, i.e. it works in filtration mode. In predominant part, in the presence of sufficient oxygen the biomass accumulated in the space between the grains, furthermore, to a lesser extent, the biofilm settled on the surface of the grains will oxidize the ammonium ion content of the water into nitrate. Possible harmful gas content of the water, e.g. methane, can be removed by a properly chosen method of deaeration, the possible iron and/or manganese content is precipitated and partly become part of the biomass. To remove the biomass and precipitation growth of iron and manganese content accumulated on the charge, the feed is increased, from time to time for a short period in an impulsive manner to a level corresponding to the definite fluid-state.

The slurry water leaving the charge disturbed in this way is fed for an appropriate period, preferably for 10-15 minutes, to a settling tank 4, the suspended matter is separated, the water-phase - if needed - is recycled to the beginning of the system with the help of a pump 5. The sludge can even be used as an inoculating matter, or is to be treated as waste. The iron, manganese and other suspended matter content of the water from the nitrification columns 2a, 2b is low. A safety filter unit 3 connected in series to nitrification columns 2a, 2b is capable of providing excellent water quality both in terms of water chemistry and microbiology, even in case of a load of 30 m/h without pre-disinfection, provided that backwash is made with water containing sterilizing agent. The charge of the safety filter unit 3 is preferably silica sand, or hydroanthracite and silica sand.

Saturation with oxygen can take place atmospherically, under pressure, in full or partial flow, furthermore by pre-treating with ozone, in given case sterilizing the air that comes into contact with water, on a bacterial filter.

Short-term intensive fluid states - shake-ups - divide the process of water purification to various cycles. During the shake-up, the charge of the nitrification columns 2a, 2b and that of the hydroxide sludge and biomass retained in it are mixed, while the excess of the cycle is removed. Resulting from the mixing the proportion of biomass in active position is constantly exchanged. The biomass not getting nutrition in the given cycle can preserve its biotic potential and activity subject to a minimum 1 mg/l remaining dissolved O₂ concentration.

Nearly the entire working time of the charge is taken by counter gravity filtering, so except for 10-20 minutes following shake-up, the iron and manganese content of the effluent water does not generally exceed 0.05 mg/l.

The suspended matter load of the safety filter unit 3 is low, however, due to its biological nature, application of a multi-layer filtration with a charge of silica sand, or hydroanthracite-silica sand is justified.

During the 10-20 minutes subsequent to the shake-ups the water containing hydroxide sludge and excess biomass is recycled to the beginning of the system, following sedimentation. The sludge of the settling tank 4 can be used as inoculating material after aeration.

Disinfection before safety filter unit 3 is generally not justified, it is sufficient to backwash it with water containing sterilizing agent.

For the treatment of water containing no absorbable organic matters, the granular material constituting the nitrifying charge is preferably silica sand with a grain size of 0.4 to 0.8 mm, preferably 0,4 to 0,6 mm. The load of the bed is 5 to 20 m/h, preferably 8 to 14 m/h. The impulse intensity of shake-ups is the multiple of initial fluidization velocity, in our case preferably 50 to 80 m/h. The time requirement of shake-ups depends on the swelling rate of the charge and the height of the free space available in the nitrification columns 2a, 2b that contain the charge, but in general in case of treatment of water containing no absorbable organic matters it is 15 to 60 seconds, and in case of water containing absorbable organic matters it is 4 to 20 seconds. The upper limit of the time requirement is determined by the necessity to avoid the wash-out of the charge due to bed swelling. In given case, mainly depending on the size, shake-up with air for a short period can be applied as well. The intensity of air shake-up is 30 to 60 m/h.

For the treatment of water containing absorbable organic matters and/or - in given case water pre-treated with ozone - the granular material constituting the nitrifying charge is preferably granulated activated carbon (GAC), or sand and granulated activated carbon. GAC grain size is preferably 0.8 to 1.6 mm. The load of the bed is 3 to 14 m/h, preferably 6 to 10 m/h. In given case, mainly depending on the size, shake-up with air for a short period can be applied as well. The intensity of air shake-up is 20 to 40 m/h.

Advantageous effects connected with the invention, in addition to those mentioned above, are as follows:
- The process, in addition to removing ammonium and nitrite, by the removal of iron and/or manganese content realizes a complex water treatment which fits well into the - possibly - existing water technologies. These can be partly converted, partly supplemented for the application of the process.
- The process is suitable for taking up sudden excess load as well. Even an increase of the ammonium content by 60 to 70 % does not result in deterioration of the water quality in case of sufficient oxygen content.
- The process can take sudden changes of load hydraulically, in the range of 20 to 80% of fluidization limit velocity.
- The iron and manganese precipitation separating from the water going through the charge do not increase the resistance of the charge, because it is able to expand in a flexible manner.
- The iron-manganese hydroxide precipitation is an excellent vehicle for the nitrifying biomass. The volume of the biomass accumulating in the pore volume of the charge is the multiple of the volume of the biomass settled on charge (sand, GAC) surface.
- Even 60% of the biomass accumulated in the nitrification columns can be recovered, and the effluent slurry water can be used for inoculation or re-inoculation of the nitrification columns.
- The short-term shake-up ensures the possibility of the removal of excess biomass and hydroxide, while the charge is able to remove fully ammonium and nitrite, and after the shake-up - within a few minutes - to retain iron and manganese.
- The so-called safety filter(s) linked after the nitrification column(s) are able to provide impeccable water both in terms of bacteriology and water chemistry, even at a filtering velocity of 30 m/h. It is not necessary to dose sterilizing agent ahead of the safety filter(s), it is sufficient to back-wash the safety filter(s) with water containing sterilizing agent.
- The operation of the charge is stable, it is insensitive, in a wide range, to the variations of load, the changes of the ammonium-ion concentration covered with dissolved oxygen, possible standstills lasting several hours and occurring even several times a day, or even 24 hour shutdowns.

## Claims

1. Process for preparing potable water from underground/raw waters by treating these waters containing ammonia and/or nitrite and additionally iron and/or manganese, in given case with the simultaneous removal of harmful gases, ***characterized by*** that the water is fed into an aeration unit (1), where an amount of oxygen is dissolved in the water in accordance with its ammonia content, then the water is made flow upwards in a nitrification column (2a, 2b...) filled with granular material, while the ammonia content of the wafer is oxidized into nitrate by the nitrifying bacteria, afterwards the effluent of nitrification is fed onto a safety filter unit (3), furthermore, if required, the harmful gas is removed, the obtained precipitated iron and manganese together with the nitrifying biomass is retained in the pores of the granular bed of the nitrification column(s), as well as in the safety filter unit (3) charge, the nitrification column (2a, 2b...) charge is shaken up from time to time in an impulse-like manner that is carried by water flow or air feed and the slurry water produced is fed into a settling tank (4).

2. Process according to Claim 1 ***characterized by*** that oxygen is dissolved atmospherically in full or partial flow.

3. Process according to Claim 1 - 2 ***characterized by*** that for treatment of water containing non-absorbable organic matters the impulse period is performed every 3-24 hours, preferably 6 -12 hours, for a period of 15 - 60 seconds.

4. Process according to Claim 1 - 2 ***characterized by*** that for treatment of water containing absorbable organic matters the impulse period is performed every 3-24 hours, preferably 6 -12 hours, for a period of 4 -20seconds.

## Patentansprüche

1. Verfahren zur Herstellung von Trinkwasser aus Grundwasser/Rohwasser, in dem diese, Ammoniak und/oder Nitrit und zusätzlich Eisen und/oder Mangan enthaltende Gewässer gegebenenfalls unter gleichzeitigem Entfernen schädlicher Gasen behandelt werden, **dadurch gekennzeichnet, dass** das Wasser in eine Belüftungseinheit (1) zugeführt wird, wo eine Menge an Sauerstoff in das Wasser dessen Ammoniakgehalt entsprechend aufgelöst wird, dann das Wasser in einer mit Granulat gefüllten Nitrifikationskolonne aufwärts geströmt wird, während der Ammoniak-Gehalt des Wassers durch die nitrifizierenden Bakterien in Nitrat oxidiert und danach das Abwasser der Nitrifikation einer Sicherheits-Filtereinheit zugeführt wird, ferner, falls erforderlich, das schädliche Gas entfernt wird, dann die erhaltene ausgeschiedene Eisen und Mangan zusammen mit der nitrifizierenden Biomasse in den Poren des Granulatbetts/der Granulatbetten der einen oder mehreren Nitrifikationskolonnen sowie in der Ladung der Sicherheits-Filtereinheit (3) beibehalten wird, und die Ladung der Nitrifikationskolonne (2a, 2b,..) zeitweise impulsartig mittels eines Wasserstroms oder einer Luftzufuhr geschüttert wird, und das erhaltene, Schlamm enthaltende Wasser einem Absetzbecken zugeführt wird.

2. Verfahren nach Anspruch 1 **dadurch gekennzeichnet, dass** der Sauerstoff atmosphärisch in Voll- oder Teilstrom aufgelöst wird.

3. Verfahren nach Anspruch 1 oder 2 **dadurch gekennzeichnet, dass** für die Behandlung von keine absorbierbare organische Stoffe enthaltendem Wasser alle 3 bis 24 Stunden, vorzugsweise 6 bis 12 Stunden eine Impulsperiode für einen Zeitraum von 15 bis 60 Sekunden durchgeführt wird.

4. Verfahren nach Anspruch 1 oder 2 **dadurch gekennzeichnet, dass** für die Behandlung von absorbierbare organische Stoffe enthaltendem Wasser alle 3 bis 24 Stunden, vorzugsweise 6 bis 12 Stunden eine Impulsperiode für einen Zeitraum von 4 bis 20 Sekunden durchgeführt wird.

## Revendications

1. Procédé de préparation d'eau potable à partir des eaux souterraines ou des eaux non-traitée par le traitement de ces eaux contenant de l'ammoniac et/ou nitrite et en plus de fer et/ou de manganèse, en option avec l'élimination simultanée de gaz nocifs, **caractérisée en ce que** l'eau est introduite dans une module d'aération, où une quantité d'oxygène est dissous dans l'eau conformément à sa teneur en ammoniaque, puis l'eau est fait affluer avec un mouvement ascendant dans une colonne de nitrification rempli d'un matériau granual, tandis que la teneur en ammoniac de l'eau est oxydé en nitrate par les bactéries nitrifiantes, ensuite l'effluent de la nitrification est amenée sur une module de filtre de sécurité, en outre, si nécessaire, le gaz nocif est enlevé, le fer et le manganèse précipité obtenu de telle manière et la biomasse nitrifiante est retenue dans les pores du lit granulaire des colonnes de nitrification, ainsi que dans le module de charge filtre de sécurité, un charge de colonne de nitrification est secoué de temps en temps dans une manière semblable à l'impulsion qui est transmis par le flux d'eau ou d'air introduit et l'eau boue produite de telle manière est injectée dans une réservoir de décantation.

2. Procédé selon la revendication 1 **caractérisé par** de l'oxygène atmosphérique se dissout dans le flux complet ou partiel.

3. Procédé selon la revendication 1 ou 2 **caractérisé par** ce traitement de l'eau contenant des materiaux organiques non résorbables la période d'impulsion est effectuée tous les 3-24 heures, de préférence 6 -12 heures pour une période de 15 - 60 secondes.

4. Procédé selon la Revendication 1 ou 2, **caractérisé par** ce traitement de l'eau contenant des materiaux organiques non résorbables la période d'impulsion est effectuée tous les 3-24 heures, de préférence 6 -12 heures pour une période de quatre-vingt secondes.
